# EUROPEAN PATENT SPECIFICATION

(11) **EP 2 106 994 B1**
(45) Date of publication and mention of the grant of the patent: **15.09.2010**
(21) Application number: 08153629.4
(22) Date of filing: 28.03.2008
(51) Int. Cl.: B62K 19/40

(54) **Bicycle frame with a receiving space**
Fahrradrahmen mit Aufnahmeraum
Cadre de bicyclette avec espace de réception

(43) Date of publication of application: 07.10.2009
(73) Proprietor: IDEAL BIKE CORP., Wu Chi Town Taichung County (TW)
(72) Inventor: Cheng, Yuan-Chih, Waipu Township, Taichung County (TW); Lin, Chun-Hung, Taichung City (TW)
(74) Representative: Lang, Christian

(56) References cited:
- EP-A- 0 212 845
- AU-B2- 566 351
- DE-A1- 19 607 938
- DE-A1-102004 047 412
- DE-U1-202005 018 291
- NL-A- 7 600 585
- US-A- 5 842 714

## Description

### BACKGROUND OF THE INVENTION

### (1)FIELD OF THE INVENTION

The present invention relates to a bicycle frame with a space defined in one of the tubes so as to accommodate a lock or a light device.

### (2)DESCRIPTION OF THE PRIOR ART

A conventional bicycle is not provided with a lock which is generally purchased by the user and hangs on a proper position on the frame.

Some of the bicycles are equipped with a simple lock which usually is located on the front fork to lock the front wheel or on the seat stays so as to lock the rear wheel.

In Document DE 196 07 938 A1 a bicycle frame is disclosed having a head tube, a seat tube and two connection tubes connecting the head tube and seat tube. Furthermore, tube sections are formed for engaging and catching the frame with a bicycle rack.

Nevertheless, the lock is made by metal material and is easily loosened so that the coating of the frame is scraped by the loosened lock and being rusting. Furthermore, the lock is exposed and easily damaged by theft.

The present invention intends to provide a bicycle frame wherein the top tube is composed of two longitudinal tubes with a transverse tube connected therebetween, a receiving space is defined in the transverse tube and a lock or a light device can be received in the space.

### SUMMARY OF THE INVENTION

The present invention relates to a bicycle frame which includes a head tube, a seat tube and at least one tube connected between the head tube and the seat tube. The at least one tube includes a first longitudinal tube connected to the head tube and a second longitudinal tube connected to the seat tube, a transverse tube is connected between the first and second longitudinal tubes. The transverse tube includes a receiving space in which a lock or a light device can be received.

The primary object of the present invention is to provide a bicycle frame with a receiving space in one of the tubes of the bicycle frame and a lock or a light device can be received in the receiving space such that the lock or light device does not loosened and scrap coating of the bicycle frame.

The object of the invention is a bicycle frame comprising a head tube, a seat tube and at least one tube connected between the head tube and the seat tube, the at least one tube including a first longitudinal tube connected to the head tube and a second longitudinal tube connected to the seat tube, a transverse tube connected between the first and second longitudinal tubes, the transverse tube including a receiving space.

Preferably, the transverse tube is substantially perpendicular to the first and second longitudinal tubes.

Preferably, the transverse tube is located a weight center of the bicycle frame.

Preferably, a lock is received in the space.

Preferably, the transverse tube includes a window and the lock is a combination lock which includes multiple operation rings which are accessed via the window.

Preferably, a light device is received in the space.

Preferably, the transverse tube is a hollow tube with at least one open end.

Preferably, the at least one tube is a top tube of the bicycle frame.

The present invention will become more obvious from the following description when taken in connection with the accompanying drawings which show, for purposes of illustration only, a preferred embodiment in accordance with the present invention.

### BRIEF DESCRIPTION OF THE DRAWINGS

Fig. 1 is a side view of a bicycle with the bicycle frame of the present invention;
Fig. 2 is a perspective view to show the bicycle with the bicycle frame of the present invention, wherein a combination lock is received in the receiving space;
Fig. 2A shows that the operation rings of the combination lock are accessible via the window in the transverse tube;
Fig. 3 shows a cantilever member on a wall extends through the transverse tube of the bicycle frame of the present invention;
Fig. 4 shows the bicycle frame having two transverse tubes through which two support rods of a bicycle carrier extend, and
Fig. 5 shows that a light device is received in the transverse tube.

### DETAILED DESCRIPTION OF THE PREFERRED EMBODIMENTS

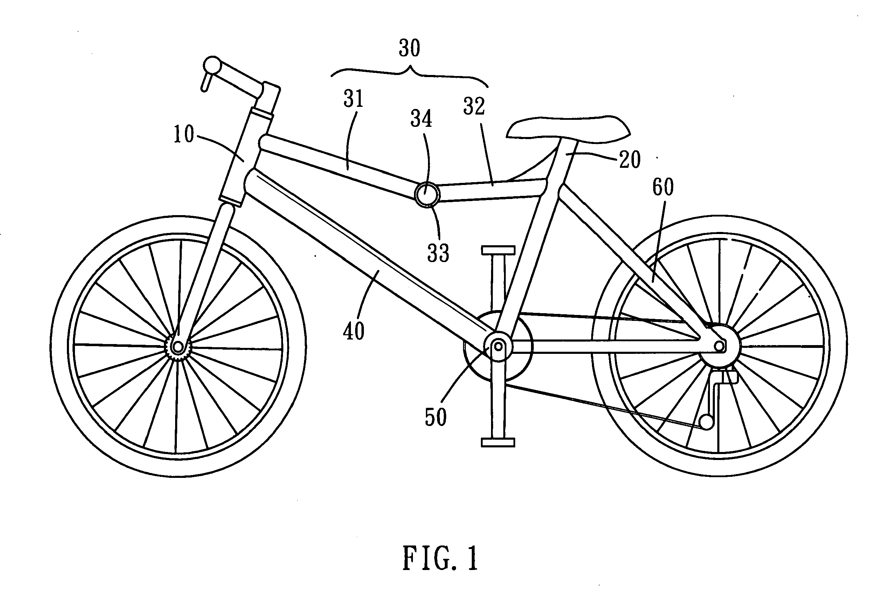

Referring to Fig. 1, the bicycle frame of the present invention comprises a head tube 10 with a front fork connected thereto, a front wheel and a handlebar are connected to the front fork, a top tube 30 and a down tube 40 extend from the head tube 10, a seat tube 20 connected to the top tube 30 and the down tube 40, two seat stays 60 and two chain stays connected to the seat tube 20, a bottom bracket 50 connected to a conjunction portion of the seat tube 20, the down tube 40 and the chain stays, a rear wheel is connected between the seat stays 60 and the chain stays, an axle extending through the bottom bracket and two crank with pedals connected to the axle.

The top tube 30 includes a first longitudinal tube 31 connected to the head tube 10 and a second longitudinal tube 32 connected to the seat tube 20, a transverse tube 33 is connected between the first and second longitudinal tubes 31, 32. The transverse tube 33 is substantially perpendicular to the first and second longitudinal tubes 31, 32. The transverse tube 33 is a hollow tube with at least one open end and a receiving space 34 is defined in the transverse tube 33.

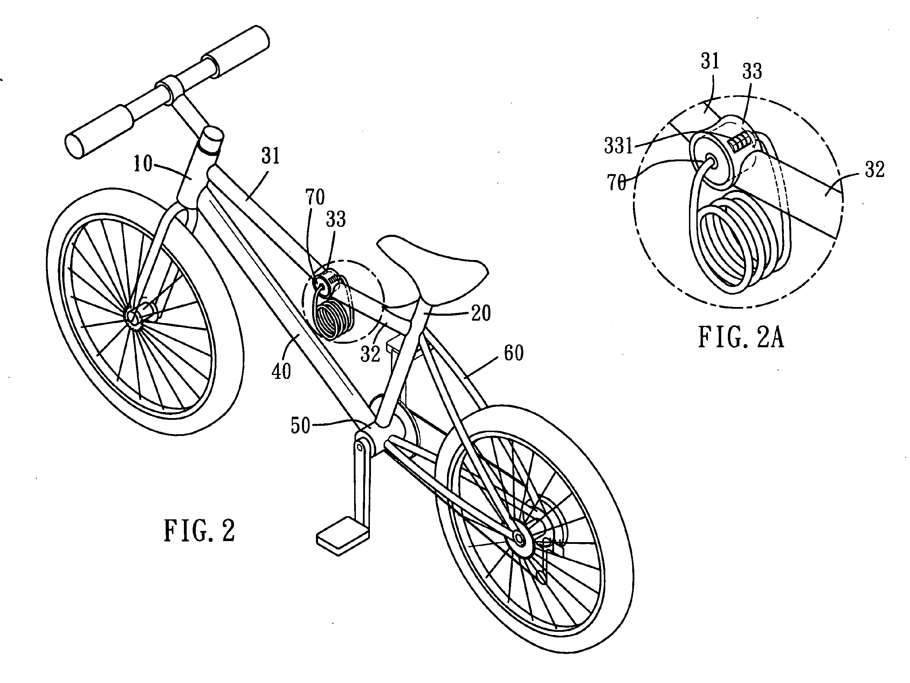

As shown in Figs. 2 and 2A, the transverse tube 33 includes a window 331 and a lock 70 is received in the receiving space 34. The lock 70 is snugly engaged with the receiving space 34 so that it does not loose. In this embodiment, the lock 70 is a combination lock which includes multiple operation rings which are accessed via the window 331. By this arrangement, the user does not need to take the lock 70 out from the receiving space 34 to lock the bicycle.

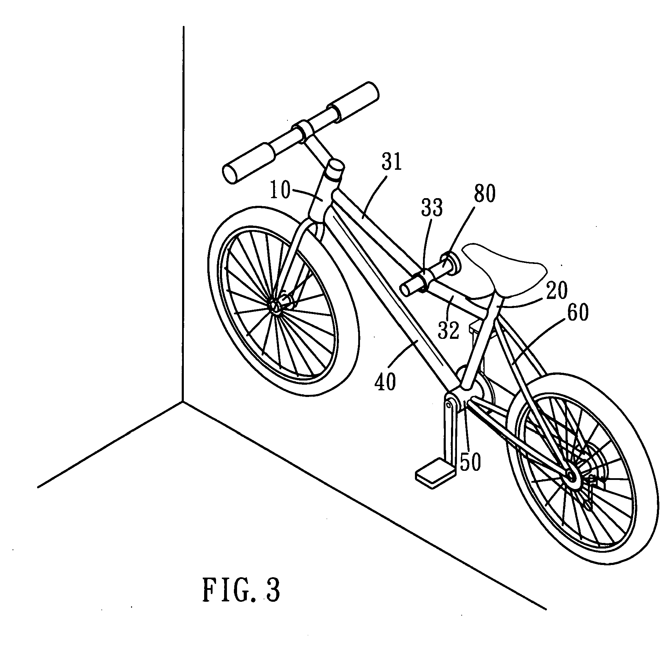

As shown in Fig. 3, the transverse tube 33 is located a weight center of the bicycle frame and a cantilever member 80 on a wall extends through the transverse tube 33 of the bicycle frame of the present invention so that the bicycle frame is easily hanged on the cantilever member 80 in a balance status.

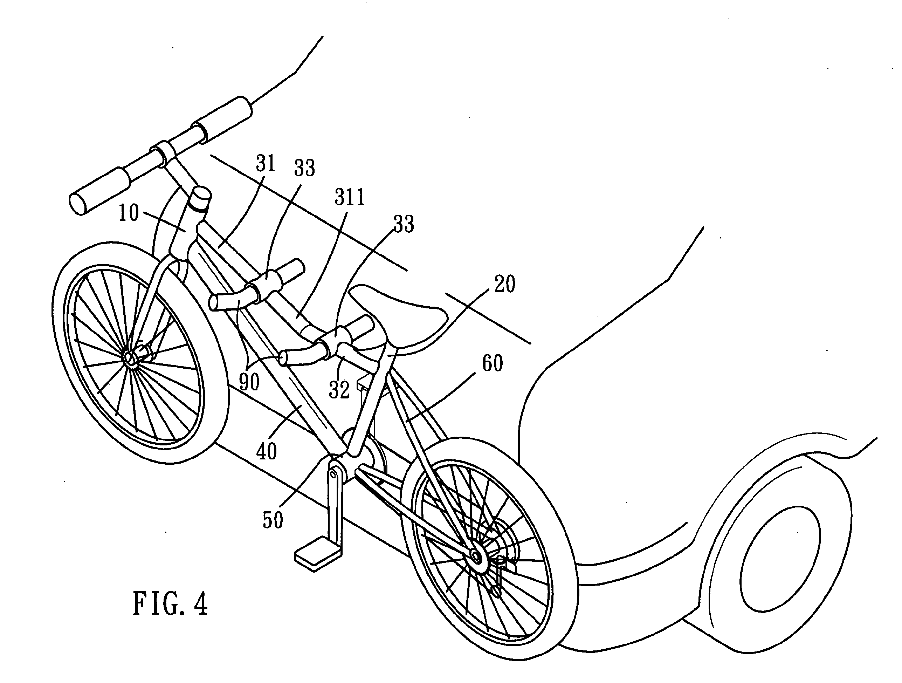

As shown in Fig. 4, the bicycle frame may have two transverse tubes 33 and two support rods of a bicycle carrier on a vehicle extend through the two transverse tubes 33 so as to carry the bicycle in a stable status.

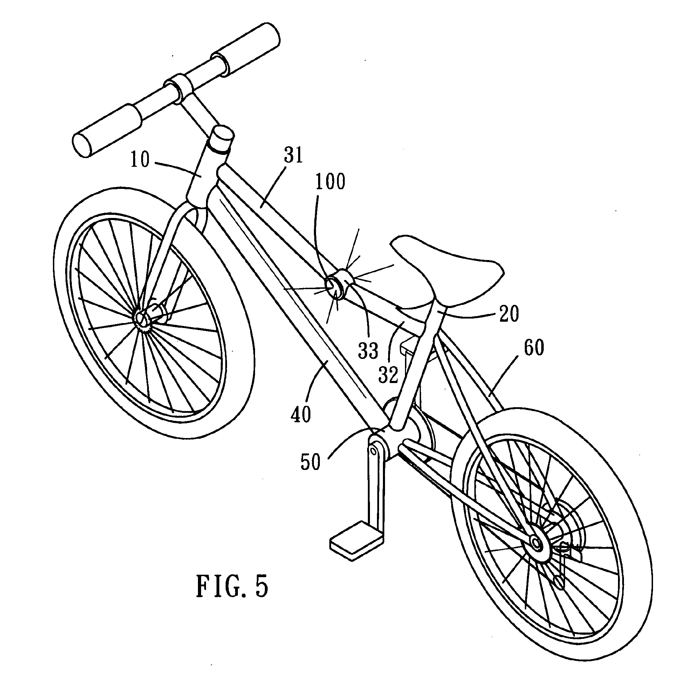

Fig. 5 shows that a light device 100 is received in the space 34 of the transverse tube 33 to allow the bicycle to be more visible.

It is noted that the down tube 40 may also include a transverse tube 33 when needed.

While we have shown and described the embodiment in accordance with the present invention, it should be clear to those skilled in the art that further embodiments may be made without departing from the scope of the present invention defined by the appended claims.

## Claims

1. A bicycle frame comprising:
a head tube (10), a seat tube (20) and at least one tube connected between the head tube (10) and the seat tube (20), **characterized by**
the at least one tube including a first longitudinal tube (31) connected to the head tube (10) and a second longitudinal tube (32) connected to the seat tube (20),
a transverse tube (33) connected between the first and second longitudinal tubes (31, 32), the transverse tube including a receiving space (34).

2. The bicycle frame as claimed in claim 1, wherein the transverse tube (33) is substantially perpendicular to the first and second longitudinal tubes (31, 32).

3. The bicycle frame as claimed in claim 1, wherein the transverse tube (33) is located at a weight center of the bicycle frame.

4. The bicycle frame as claimed in claim 1, wherein a lock (70) is received in the space (34).

5. The bicycle frame as claimed in claim 4, wherein the transverse tube (33) includes a window (331) and the lock (70) is a combination lock which includes multiple operation rings which are accessed via the window (331).

6. The bicycle frame as claimed in claim 1, wherein a light device (100) is received in the space (34).

7. The bicycle frame as claimed in claim 1, wherein the transverse tube (33) is a hollow tube with at least one open end.

8. The bicycle frame as claimed in claim 1, wherein the at least one tube is a top tube (30) of the bicycle frame.

## Patentansprüche

1. Fahrradrahmen umfassend:
einen Gabelschaft (10), ein Sitzrohr (20) und wenigstens ein Rohr, das mit dem Gabelschaft (10) und dem Sitzrohr (20) verbunden ist,
**gekennzeichnet dadurch, dass**
das wenigstens eine Rohr ein erstes längliches Rohr (31), das mit dem Gabelschaft (10) verbunden ist, und ein zweites längliches Rohr (32), das mit dem Sitzrohr (20) verbunden ist, umfasst,
und durch ein Querrohr (33), das mit dem ersten und zweiten länglichen Rohren (31, 32) verbunden ist, wobei das Querrohr einen Aufnahmeraum (34) umfasst.

2. Fahrradrahmen nach Anspruch 1,
**dadurch gekennzeichnet, dass**
der Querrohr (33) im Wesentlichen senkrecht zu den ersten und zweiten Rohren (31, 32) ist.

3. Fahrradrahmen nach Anspruch 1,
**dadurch gekennzeichnet, dass**
das Querrohr (33) an einem Schwerpunkt des Fahrradrahmens angeordnet ist.

4. Fahrradrahmen nach Anspruch 1,
**dadurch gekennzeichnet, dass**
ein Schloss (70) in dem Aufnahmeraum (34) aufgenommen ist.

5. Fahrradrahmen nach Anspruch 4,
**dadurch gekennzeichnet, dass**
das Querrohr (33) ein Fenster (331) umfasst und das Schloss (70) ein Kombinationsschloss ist, welches mehrere Betätigungsringe umfasst, die über das Fenster (331) zugänglich sind.

6. Fahrradrahmen nach Anspruch 1,
**dadurch gekennzeichnet, dass**
eine Leuchtvorrichtung (100) in dem Aufnahmerahmen (34) aufgenommen ist.

7. Fahrradrahmen nach Anspruch 1,
**dadurch gekennzeichnet, dass**
das Querrohr (33) ein hohles Rohr mit wenigstens einem offenen Ende ist.

8. Fahrradrahmen nach Anspruch 1,
**dadurch gekennzeichnet, dass**
das wenigstens eine Rohr ein Oberrohr (30) des Fahrradrahmens ist.

## Revendications

1. Cadre de bicyclette comprenant :
un tube de tête (10), un tube de siège (20) et au moins un tube relié entre le tube de tête (10) et le tube de siège (20), **caractérisé par** :
l'au moins un tube comprenant un premier tube longitudinal (31) relié au tube de tête (10) et un second tube longitudinal (32) relié au tube de siège (20) ;
un tube transversal (33) relié entre les premier et second tubes longitudinaux (31, 32), le tube transversal comprenant un espace de réception (34).

2. Cadre de bicyclette selon la revendication 1, dans lequel le tube transversal (33) est sensiblement perpendiculaire aux premier et second tubes longitudinaux (31, 32).

3. Cadre de bicyclette selon la revendication 1, dans lequel le tube transversal (33) est positionné au niveau d'un centre de gravité du cadre de bicyclette.

4. Cadre de bicyclette selon la revendication 1, dans lequel un élément de verrouillage (70) est logé dans l'espace (34).

5. Cadre de bicyclette selon la revendication 4, dans lequel le tube transversal (33) comprend une fenêtre (331) et dans lequel l'élément de verrouillage (70) est un élément de verrouillage à combinaisons qui comprend de multiples spirales auxquelles on accède via la fenêtre (331).

6. Cadre de bicyclette selon la revendication 1, dans lequel un dispositif d'éclairage (100) est logé dans l'espace (34).

7. Cadre de bicyclette selon la revendication 1, dans lequel le tube transversal (33) est un tube creux pourvu d'au moins une extrémité ouverte.

8. Cadre de bicyclette selon la revendication 1, dans lequel l'au moins un tube est un tube supérieur (30) du cadre de bicyclette.
